(19) Europäisches Patentamt

European Patent Office

Office européen des brevets

(11) **EP 1 098 283 A2**

(12) **EUROPEAN PATENT APPLICATION**

(43) Date of publication:
09.05.2001 Bulletin 2001/19

(51) Int. Cl.7: **G08B 13/24**, E05B 49/00

(21) Application number: 00114917.8

(22) Date of filing: 17.07.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 02.11.1999 US 432907

(71) Applicant:
**MICROCHIP TECHNOLOGY INC.**
**Chandler, AZ 85224-6199 (US)**

(72) Inventors:
• **Marneweck, Willem J.**
**Gilbert, Arizona 85233 (US)**
• **van Niekerk, Johannes Albertus**
**Chandler, Arizona 85226 (US)**

(74) Representative:
**Patry, Didier Marcel Pierre**
**Baker Botts**
**45 Ludgate Hill**
**London EC4M 7JU (GB)**

(54) **Passive signal discriminator for wake-up of low power transponder**

(57) A passive signal discriminator for preventing activation by undesired signals of low power transponder circuits in a keyless entry system. These undesired signals may be noise or interfering signals. An asymmetrical low pass filter is used to determine the presence of a signal having a defined length of time. The asymmetrical filter has a longer charge time then discharge time, thereby being adapted to quickly discharge upon the loss of a signal. The passive signal discriminator does not require power from a power source to operate.

FIGURE 1

Printed by Xerox (UK) Business Services
2.16.7 (HRS)/3.6

**Description**

This invention relates generally to a keyless entry systems, and more particularly to preventing unnecessary wake-up of dormant power circuits in the keyless entry systems.

Radio Frequency Identification (RFID) systems use radio frequencies and/or magnetic fields to identify, locate and track people, assets, and animals. The RFID systems are also used in keyless security and entry systems. Vehicular applications include remote keyless entry, alarm systems and immobilizers for cars and trucks. Consumer applications include car alarms, garage door openers, burglar alarms, gate locks, door locks and the like. In remote keyless entry systems, a transponder is activated when an interrogation signal (challenge) is received. The interrogation signal may be a time-varying electromagnetic radio frequency (RF) signal that is transmitted by a keyless entry system reader such as a microprocessor and radio frequency generator/modulator. The transponder, upon activation, responds to the interrogation challenge (bi-directional authentication). Generally, the keyless entry system transponder is embedded in a key fob, or even the key, and is powered from a small battery integral therewith. It is desirable and at times imperative that the power of this small battery be conserved.

An effective way of conserving battery power is to turn off, i.e., disconnect the electronic circuits of the transponder and any associated circuitry not required in detecting the presence of an electromagnetic RF signal (interrogation challenge) from the keyless entry system reader. Only when the interrogation signal is detected, are the electronic circuits of the transponder reconnected to the battery power source (wake-up). A problem exists, however, when the transponder receiver is exposed to noise sources such as electromagnetic radiation (EMR) emanating from, for example, televisions and computer monitors having the same frequency as the interrogation signal, the transponder will wake-up unnecessarily. If the transponder receiver is exposed to a continuous noise source, the battery may be depleted within a few days.

Therefore, what is needed is a system, method and apparatus for preventing wake-up of the transponder circuits by undesired noise signals.

The invention overcomes the above-identified problems as well as other shortcomings and deficiencies of existing technologies by providing a low pass filter circuit that requires a wake-up signal to be present for a desired length of time. Noise signals will typically not have enough radio frequency electromagnetic energy over the desired length of time to exceed the wake-up time threshold of the low pass filter. According to the present invention, the low pass filter is passive (draws no power from the battery).

In accordance with an embodiment of the present invention, an asymmetrical time constant low pass filter comprises a resistor in parallel with a diode, both being connected to a capacitor. The resistor and diode are in series with the signal path from the low frequency interrogation receiver to the transponder wake-up circuit. The capacitor is connected in parallel with the input of the transponder wake-up circuit and ground or signal common. When a signal is received by the interrogation receiver, be it an actual interrogation signal or an undesired noise signal, the capacitor begins charging to a desired voltage level. The charging time constant is determined by the combination of the resistor and capacitor values according to the formula: $\tau = RC$, where $\tau$ is the time constant, R is the resistance is ohms and C is the capacitance in farads.

A desired interrogation signal will maintain enough signal energy over a desired time period for the charging voltage across the capacitor to reach the desired voltage level (hereinafter "wake-up threshold voltage"). Once the wake-up threshold voltage is reached, the transponder circuits wake-up and a response to the challenge is sent by the transponder. An undesired noise signal will charge the capacitor for a time period less than the desired time period and when the undesired noise signal energy is not sufficient or present to continue charging the capacitor, the diode in parallel with the resistor will quickly discharge the capacitor. Thus, the voltage across the capacitor will slowly build up so long as a signal having energy at a desired frequency is being received, but if that signal energy drops, then the voltage charge across the capacitor is quickly bleed off through the diode. In this way the wake-up circuit of the transponder is exposed to far less false triggering and thus causes less unnecessary drain on the battery power supply. Any interruption of a detected signal will quickly reset the voltage charge on the capacitor, and if the wake-up threshold voltage is not yet reached, then transponder circuits will not be connected to the battery power supply.

A feature of the present invention is preventing the connection of (waking up) power consuming circuits to a battery power source in the presence of noise signals.

Another feature of the present invention is a passive low pass filter which consumes no power from the battery power source.

Still another feature is an asymmetrical time constant low pass filter which requires signal energy to be present for a desired time period for charging a capacitor to a wake-up threshold, and quickly discharges the capacitor if the signal energy is not present.

An advantage of the present invention is reducing the occurrence of the false triggering of a wake-up action on dormant electronic circuits.

Another advantage is reducing unnecessary power consumption from a battery power source.

Still another advantage is increased battery operating time due to better defined wake-up criteria.

Features and advantages of the invention will be apparent from the following description of presently preferred embodiments, given for the purpose of disclosure and taken in conjunction with the accompanying drawings.

Figure 1 is schematic block diagram of a passive entry system according to an embodiment of the invention; and
Figure 2 is schematic block diagram of a passive entry system according to another embodiment of the invention.

The invention substantially reduces unnecessary power drain from a battery power source in a keyless entry system transponder and associated circuits thereto. The invention comprises an asymmetrical time constant passive low pass filter connected between an electromagnetic energy or radio frequency receiver/detector and wake-up logic which controls the connection of battery power to the keyless entry system transponder and associated circuits thereto.

Referring now to the drawings, the details of the preferred embodiment of the invention are schematically illustrated. Elements in the drawings that are the same will be represented by the same numbers, and similar elements will be represented by the same numbers with a different lower case letter suffix.

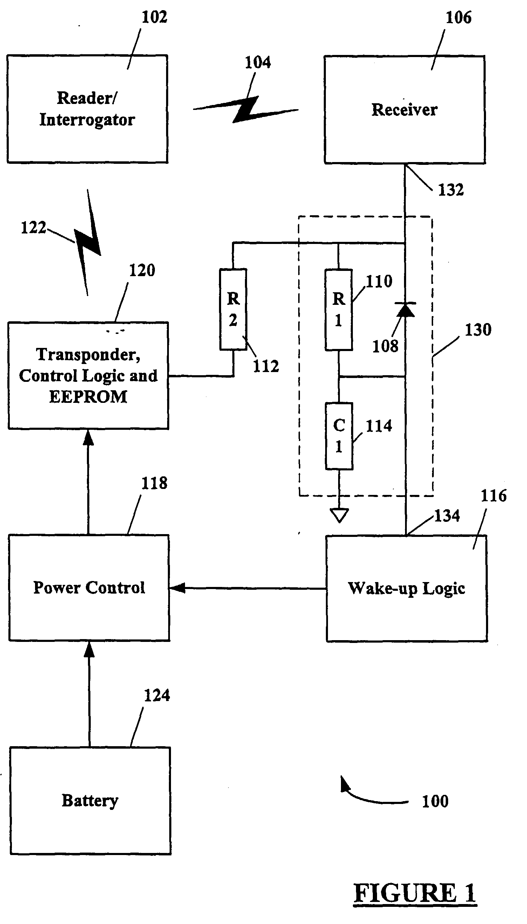

Referring now to Figure 1, a schematic block diagram of a keyless entry system, according to an embodiment of the invention, is illustrated. A keyless entry system is generally indicated by the numeral 100. The keyless entry system 100 comprises a reader/interrogator 102, a receiver 106, an asymmetrical time constant low pass filter 130, wake-up logic 116, power control 118, a transponder and associated circuits thereto 120, and a battery 124. The receiver 106, asymmetrical time constant low pass filter 130, wake-up logic 116, power control 118, and transponder and associated circuits thereto 120 may be fabricated in one or more integrated circuit packages, and may be further integrated with the battery 124 into a small keyfob, embedded into the head of a key, made in the shape of an access card and the like.

The reader/interrogator 102 transmits an interrogation signal 104 that is received by the receiver 106. The receiver 106 is adapted to receive signals at a desired frequency and signal strength, and will receive any signal at that desired frequency plus or minus the bandwidth of tuned circuits (not illustrated) of the receiver 106. When the desired frequency interrogation signal is received by the receiver 106, the resulting detected signal at the output 132 of the receiver 106 is delayed for a desired time by the low pass filter 130 before the wake-up logic 116 detects the signal being present at its input 134. Once the desired frequency interrogation signal is detected by the wake-up logic 116, the power control 118 connects the battery 124 to the transponder and associated circuits thereto 120.

Information in the received interrogation signal 104 is connected from the output 132, through a resistor 112, to a data input of the transponder 120. After detection and synchronization of the received interrogation signal 104, the transponder 120 transmits an acknowledgement or verification signal 122 to the reader/interrogator 102. Upon receipt of a correct verification signal 122, the reader/interrogator 102 causes a desired action to occur, such as for example, unlocking an automobile door, garage door, building entrance, opening a security gate, turning on or off lights, disarming a security system, and the like.

An embodiment of the keyless entry system 100 includes an electronic key or keyfob that can remain in a pocket or purse, and when brought into, for example, a low frequency magnetic field surrounding a vehicle (not illustrated) generated by the reader/interrogator 102, the electronics in the key or keyfob wakes up and starts communicating with the reader/interrogator 102 in the vehicle (not illustrated). Once a proper verification is detected by the reader/interrogator, the vehicle door may unlock, or even automatically open. The present invention substantially reduces false and unnecessary wake-up of the electronics in the key or keyfob and thus increases the useful battery life thereof.

The resistor 110 (R1) may preferably be about one megohm ($10^6$ ohm) and the capacitor 114 (C1) may preferably be about two nanofarads ($2 \times 10^{-9}$ farads). These values give a time constant, $\tau = RC$, of about $2 \times 10^{-3}$ seconds, or two milliseconds. This is a sufficient time delay to insure that the wake-up logic 116 is not false triggered by undesired noise signals. According to the invention, if the capacitor has not been charged for at least the time constant, $\tau$, then the wake-up threshold has not been reached on the input 134. When there is no signal on the output 132 the voltage thereon may be less than the voltage on the capacitor 114 and input 134 after some charging of the capacitor 114. Whenever the signal voltage on the output 132 is less than the voltage on the capacitor 114, the diode 108 quickly discharges the voltage on the capacitor 114 (the diode 108 effectively shorts out the resistor 110). Therefore, if the received signal at the output 132 does not remain at the desired voltage level for at least the time constant, $\tau$, then the wake-up threshold is never reached, and whatever voltage level happens to be present on the capacitor 114 is quickly discharged through the diode 108. Once the capacitor 114 has been discharged, the signal at the output 132 must be at a desired value for at least the time constant, $\tau$, before the wake-up threshold at the input 134 may be reached. Thus, noise, or periodic or aperiodic nuisance signals will not activate the wake-up logic 116.

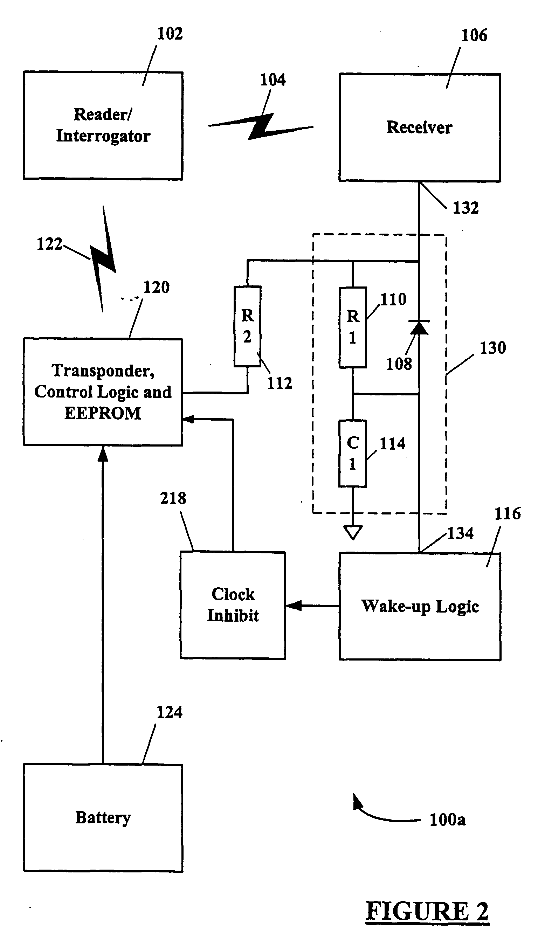

It is contemplated and within the scope of the present invention that in addition to, or in lieu of, the power control 118, clock logic gates may be used to inhibit clocking of power consuming logic circuits which, in complementary metal oxide semiconductor (CMOS) transistor logic, effectively and substantially reduces the power drain of the circuits. Referring now to Figure 2, a schematic block diagram of a keyless entry system, according to another embodiment of the invention, is illustrated. A keyless entry system 100a comprises the circuits of the embodiment illustrated in Figure 1 except that the transponder and associated circuits thereto 120 are directly connected to the battery 124. A clock inhibit 218 enables and disables clock signals in the transponder and associated circuits thereto 120 so that the CMOS circuits thereof draw minimal power from the battery 124. The wake-up logic 116 controls the clock inhibit 218 in a similar fashion to the power control 118 illustrated in Figure 1 and described herein above. When a wake-up signal is present on the output of the wake-up logic 116, the clock inhibit 218 enables the clocks in the transponder and associated circuits thereto 120, and the response signal 122 is sent to the interrogator 102.

The invention, therefore, is well adapted to carry out the objects and attain the ends and advantages mentioned, as well as others inherent therein. While the invention has been depicted, described, and is defined by reference to particular preferred embodiments of the invention, such references do not imply a limitation on the invention, and no such limitation is to be inferred. The invention is capable of considerable modification, alteration, and equivalents in form and function, as will occur to those ordinarily skilled in the pertinent arts. The depicted and described preferred embodiments of the invention are exemplary only, and are not exhaustive of the scope of the invention. Consequently, the invention is intended to be limited only by the, spirit and scope of the appended claims, giving full cognizance to equivalents in all respects.

## Claims

1. A keyless entry and security system having a passive signal discriminator for reducing false wake-up of power consuming circuits, said system comprising:

an interrogator, said interrogator transmits an interrogation signal and listens for a response thereto;
a receiver adapted for reception of the interrogation signal, said receiver having a receiver output and producing a first signal on the receiver output when receiving the interrogation signal;
wake-up logic having a wake-up input and a wake-up output, said wake-up logic producing a third signal on the wake-up output when a second signal is received on the wake-up input; and
an asymmetrical time constant low pass filter connected between the receiver output and the wake-up input, wherein the second signal is generated from said asymmetrical time constant low pass filter if the first signal is present for a desired time, and if the first signal is not present for the desired time then the second signal is not generated.

2. The keyless entry and security system of claim 1, further comprising a power control circuit having a power input, power output and a control input connected to the output of said wake-up logic, wherein the power input is connected to the power output when the third signal is received at the control input of said power control circuit.

3. The keyless entry and security system of claim 2, further comprising a transponder, said transponder connected to the power output and receiving power therefrom, said transponder having a data input connected to the receiver output for detecting the received interrogation signal and sending a response signal to said interrogator when power is received from the power output of said power control circuit.

4. The keyless entry and security system of claim 2, wherein the power input of said power control circuit is connected to a power source.

5. The keyless entry and security system of claim 4, wherein the power source is a battery.

6. The keyless entry and security system of claim 1, further comprising a clock inhibit circuit, said clock inhibit circuit being controlled by the third signal such that clock signals are inhibited when there is no third signal present, and the clock signals are enabled when the third signal is present.

7. The keyless entry and security system of claim 6, further comprising a transponder, said transponder connected to said clock inhibit circuit, said transponder having a data input connected to the receiver output for detecting the received interrogation signal and sending a response signal to said interrogator when the clock signals are enabled.

8. The keyless entry and security system of claim 1, wherein said asymmetrical time constant low pass filter comprises:

a resistor connected between the receiver output and the wake-up input;
a diode connected between the receiver output and the wake-up input; and
a capacitor connected between the wake-up input and a signal common.

**9.** The keyless entry and security system of claim 8, wherein said resistor and said capacitor determine the desired time.

**10.** The keyless entry and security system of claim 9, wherein said resistor is about one megohm and said capacitor is about $2 \times 10^{-9}$ farads.

**11.** The keyless entry and security system of claim 10, wherein the desired time is about two milliseconds.

**12.** A method for reducing false wake-up of power consuming circuits in a keyless entry and security system, said method comprising the steps of:

transmitting an interrogation signal and listening for a response signal thereto;
receiving the interrogation signal and producing a first signal therefrom;
delaying the first signal with an asymmetrical time constant low pass filter for a desired time, wherein if the first signal is present for the desired time then generating a second signal;
applying power to a transponder when the second signal is generated; and
transmitting the response signal after power is applied to the transponder to acknowledge the received interrogation signal.

**13.** The method of claim 12, wherein the desired time is determined by a time constant of a resistor and a capacitor.

**14.** The method of claim 13, wherein if the first signal is not present for the desired time the resistor is bypassed with a diode so as to quickly discharge the capacitor.

**15.** An apparatus for reducing false wake-up of power consuming circuits in a keyless entry and security system, said apparatus comprising:

a receiver adapted for reception of an interrogation signal, said receiver having a receiver output and producing a first signal on the receiver output when receiving the interrogation signal;
wake-up logic having a wake-up input and a wake-up output, said wake-up logic producing a third signal on the wake-up output when a second signal is received on the wake-up input; and
an asymmetrical time constant low pass filter connected between the receiver output and the wake-up input, wherein the second signal is generated from said asymmetrical time constant low pass filter if the first signal is present for a desired time, and if the first signal is not present for the desired time then the second signal is not generated.

**16.** The apparatus of claim 15, further comprising a power control circuit having a power input, power output and a control input connected to the output of said wake-up logic, wherein the power input is connected to the power output when the third signal is received at the control input of said power control circuit.

**17.** The apparatus of claim 16, further comprising a transponder, said transponder connected to the power output and receiving power therefrom, said transponder having a data input connected to the receiver output for detecting the received interrogation signal and sending a response signal to said interrogator when power is received from the power output of said power control circuit.

**18.** The apparatus of claim 16, wherein the power input of said power control circuit is adapted for connection to a power source.

**19.** The apparatus of claim 15, wherein said asymmetrical time constant low pass filter comprises:

a resistor connected between the receiver output and the wake-up input;
a diode connected between the receiver output and the wake-up input; and
a capacitor connected between the wake-up input and a signal common.

**FIGURE 1**

**FIGURE 2**